# FASCICULE DE BREVET EUROPEEN

(11) **EP 1 044 076 B1**
(45) Date de publication et mention de la délivrance du brevet: **17.11.2004**
(21) Numéro de dépôt: 98963634.5
(22) Date de dépôt: 24.12.1998
(51) Int. Cl.: B08B 3/02, B08B 1/02

(54) **APPAREIL DE NETTOYAGE DE FIBRES OU FILAMENTS**
VORRICHTUNG ZUM REINIGEN VON FASERN ODER FÄDEN
APPARATUS FOR CLEANING FIBRES OR FILAMENTS

(30) Priorité: 29.12.1997 FR 9716821
(43) Date de publication de la demande: 18.10.2000
(73) Titulaire: ELECTRICITE DE STRASBOURG (SOCIETE ANONYME), 67000 Strasbourg (FR)
(72) Inventeur: POUS, Yves, F-67100 Strasbourg (FR)
(74) Mandataire: Nuss, Pierre
(86) Numéro de dépôt international: PCT/FR1998/002876
(87) Numéro de publication internationale: WO 1999/033581

(56) Documents cités:
- DE-A- 2 741 276
- DE-A- 4 432 681
- GB-A- 1 466 677
- GB-A- 2 003 840
- US-A- 3 882 568
- US-A- 4 092 991
- US-A- 4 591 390
- US-A- 5 056 180
- US-A- 5 056 185
- US-A- 5 118 357
- US-A- 5 558 113
- US-A- 5 634 236

## Description

La présente invention concerne un appareil pour le nettoyage de fibres ou de filament selon le préambule de la revendication 1.

Un appareil de ce type est décrit par example dans le document US-A- 5 056 185.

Un câble à fibres optiques se compose, de par sa fabrication, d'une gaine de protection mécanique et d'étanchéité qui peut être réalisée en un matériau plastique, métallique ou autre.

A l'intérieur de cette protection mécanique se trouvent un ou des tubes contenant des fibres optiques baignant dans du gel ou de la graisse et d'un brin ou jonc central autour duquel sont disposés lesdits tubes.

Pour exploiter ces câbles à fibres optiques, et notamment assurer leur connexion ou interconnexion, il faut ôter la gaine de protection mécanique, couper le brin ou jonc central, puis détuber les fibres sur une certaine longueur (généralement plusieurs mètres) et les nettoyer.

Le nettoyage de ces fibres se fait actuellement manuellement avec un chiffon ou un papier imbibé d'alcool ou d'un autre solvant, au moyen duquel l'opérateur nettoie lesdites fibres, une à une, sur toute la longueur détubée, pour enlever le gel ou la graisse dont elles sont couvertes et permettre leur séparation et leur individualisation, nécessaires à leur mise en oeuvre.

Ce nettoyage pratiquement obligatoire pour pouvoir utiliser ces fibres dans les règles de l'art, entraîne actuellement, les problèmes suivants :
- compte tenu du nombre de fibres par tube, du nombre de tubes par câble et de la longueur à détuber, le mode de nettoyage actuel est, d'une part, très long et très fastidieux à effectuer et, d'autre part, périlleux et très délicat à réaliser du fait des nombreuses manipulations risquant de provoquer la casse des fibres qui sont d'une très grande fragilité ;
- si l'une des fibres casse, l'opération de dégainage, détubage, nettoyage etc... est à recommencer totalement pour toutes fibres du câble considéré, entraînant un surcoût horaire et matériel important ;
- ce surcoût précité peut être encore fortement augmenté lorsque le câble, déjà posé ou enterré, est trop court pour recommencer l'opération de dégainage, détubage, nettoyage etc..., et doit être entièrement remplacé sur plusieurs centaines de mètres, voire quelques kilomètres ;
- si pendant l'opération de nettoyage manuel, des impuretés abrasives (sable, copeaux de perçage, etc... ) adhèrent accidentellement au chiffon, on risque très fortement, en frottant les fibres d'endommager la gaine de protection qui les entoure individuellement et, par la suite, de provoquer la casse lors du lovage dans les cassettes, ce à court ou à long terme, ce qui est très gênant vu la quantité d'information en transit sur chaque fibre.

Par le document US-A-5 056 185, on connaît un appareil fixe de nettoyage d'une fibre optique passant dans ledit appareil pendant son transfert entre une bobine initiale, de laquelle elle est déroulée, et une bobine finale, sur laquelle elle est rembobinée.

Cet appareil connu est principalement composé, d'une part, d'un contenant comprenant une partie inférieure formant réceptacle étanche pour un liquide de nettoyage et une partie supérieure formant couvercle, ledit contenant étant traversé progressivement, suivant un trajet de traitement prédéfini, par les filaments ou fibres à nettoyer, sur toute leur longueur et, d'autre part, par des moyens actifs de mise en contact positif du liquide de nettoyage avec lesdit(e)s filaments ou fibres pour générer une action nettoyante et, enfin, par des moyens de guidage de ces demier(e)s à travers ledit appareil de nettoyage.

Toutefois, cet appareil n'est destiné qu'au nettoyage d'éléments allongés unitaires et sur poste fixe, ledit appareil n'étant pas transportable sur différents sites d'intervention distants, tels que des chantiers.

La présente invention a notamment pour but de pallier les inconvénients précités et de proposer une solution permettant un nettoyage, rapide, aisé et sûr de produits du type filaments ou fibres, en particulier de constitution fragile et réunis en grand nombre, notamment sur des longueurs importantes.

L'invention a également pour but de proposer une solution simple assurant un nettoyage fiable et de qualité constante et pouvant être facilement mise en oeuvre sur des chantiers et aisément transportée et manipulée par les opérateurs, sans nécessiter des moyens encombrants ou lourds.

A cet effet, la présente invention a pour objet un appareil pour le nettoyage de fibres ou de filaments, notamment de fibres optiques en faisceau(x) après leur détubage, essentiellement composé, d'une part, d'un contenant comprenant une partie inférieure formant réceptacle étanche pour un liquide de nettoyage et une partie supérieure formant couvercle, ledit contenant étant traversé progressivement, suivant un trajet de traitement prédéfini, par les filaments ou fibres à nettoyer, sur toute leur longueur et, d'autre part, par des moyens actifs de mise en contact positif du liquide de nettoyage avec lesdit(e)s filaments ou fibres pour générer une action nettoyante et, enfin, par des moyens de guidage de ces dernier(e)s à travers ledit appareil de nettoyage, caractérisé en ce que lesdits moyens de guidage comprennent au moins un peigne ou un guide séparateur analogue au niveau de l'entrée du trajet de traitement et en ce que la partie supérieure est munie d'au moins une poignée de préhension pour le déplacement dudit appareil de nettoyage lors de son transport et/ou de sa mise en oeuvre, ledit appareil étant ainsi adapté pour une utilisation sur chantier.

Des formes préférées de l'invention font l'objet des revendications dépendantes.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale d'un appareil de nettoyage selon un premier mode de réalisation de l'invention ;
la figure 2 est une vue en coupe selon A-A de l'appareil de nettoyage représenté sur la figure 1 ;
la figure 3 est une vue de dessus de l'appareil de nettoyage représenté sur la figure 1, le couvercle étant en position ouverte ;
la figure 4 est une représentation schématique fonctionnelle de l'appareil de nettoyage représenté sur les figures 1 à 3 ;
la figure 5 est une vue en élévation frontale et en coupe d'un appareil de nettoyage selon un second mode de réalisation de l'invention :
la figure 6 est une vue simplifiée en élévation latérale et en coupe de l'appareil de nettoyage représenté à la figure 5, et,
la figure 7 est une vue en élévation frontale de l'appareil de nettoyage représenté aux figures 5 et 6, le couvercle étant en position ouverte.

Conformément à l'invention et comme le montrent les figures des dessins annexés, l'appareil de nettoyage 1 est essentiellement composé, d'une part, d'un contenant comprenant une partie inférieure 2 formant réceptacle étanche pour un liquide de nettoyage 3 et une partie supérieure 4 formant couvercle et munie d'au moins une poignée de préhension 23 pour le déplacement dudit appareil de nettoyage 1 lors de son transport et/ou de sa mise en oeuvre, ledit contenant étant traversé progressivement, suivant un trajet de traitement 5 prédéfini, par les filaments ou fibres 6 à nettoyer, sur toute leur longueur, d'autre part, par des moyens actifs 7, 7' ; 8, 8' de mise en contact positif du liquide de nettoyage 3 avec lesdit(e)s filaments ou fibres 6 pour générer une action nettoyante et, enfin, par des moyens de guidage 9 ; 10, 10' ; 11 de ces dernier(e)s à travers ledit appareil de nettoyage 1, comprenant au moins un peigne 9 ou un guide séparateur analogue au niveau de l'entrée du trajet de traitement 5.

La prévision d'un contenant clos permet d'effectuer l'opération de nettoyage dans un environnement confiné, isolé de l'extérieur et des agents de pollution externes, nombreux au niveau des chantiers.

Les moyens actifs 7, 7' ; 8, 8' devront avantageusement non seulement débarrasser le ou les faisccau(x) de fibres ou de filaments 6 de tout gel, graisse ou autre impureté mais également démêler lesdit(e)s fibres ou filaments ou en tout cas les prétraiter pour faciliter leur démêlage ultérieur.

Le liquide de nettoyage 3 est avantageusement un solvant pour le matériau visqueux enduisant les fibres 6, par exemple du type connu sous la désignation....

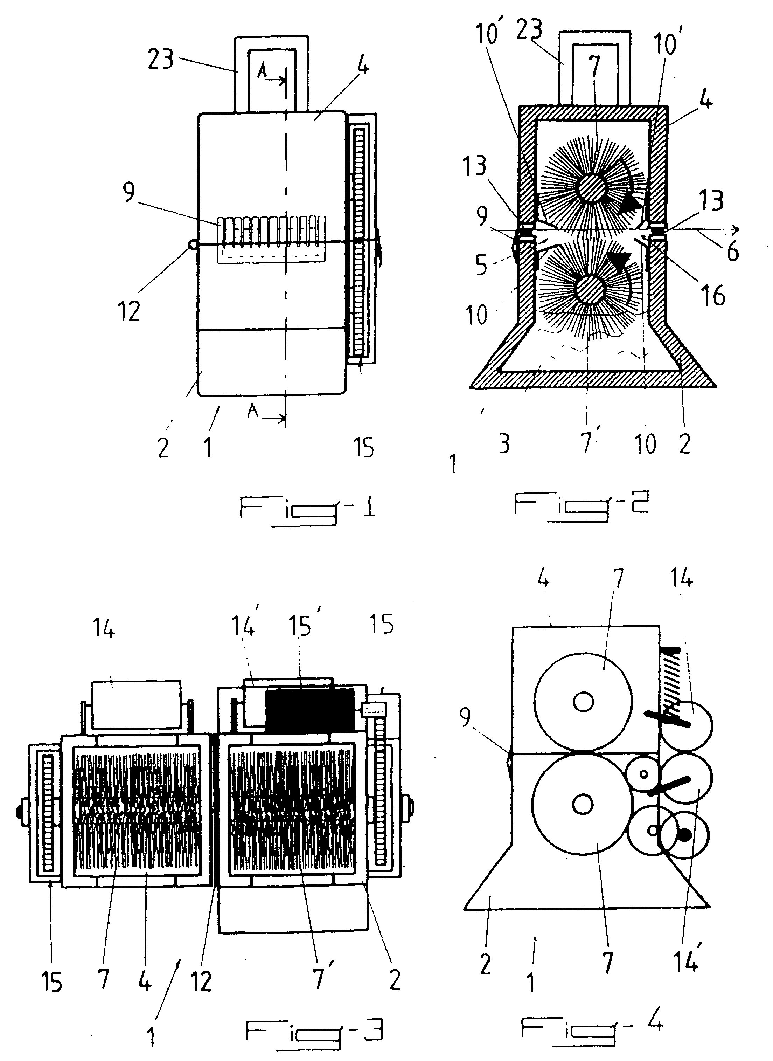

Selon une première caractéristique de l'invention, représentée notamment aux figures 1, 2, 5 et 7 des dessins annexés, le couvercle 4 est articulé par une liaison à charnière 12 sur le réceptacle 2, avec un axe de pivotement sensiblement parallèle au trajet de traitement 5, le couvercle 4 et/ou le réceptacle 2 comprenant des moyens d'étanchéisation 13 coopérant lors de la fermeture du contenant pour constituer un volume clos étanche, tout en autorisant un passage aisé des filaments ou fibres 6 à nettoyer au niveau des zones de jonction couvercle 4 / réceptacle 2 situées dans la continuité du trajet de traitement 5.

Une telle structure de la machine de nettoyage 1 simplifie et facilite son utilisation puisqu'il suffira d'ouvrir le couvercle 4, de verser le produit de nettoyage 3 dans le réceptacle 2, de déposer la portion de début du ou des faisceau(x) de fibres ou de filaments 6 à nettoyer dans le contenant selon le trajet de traitement 5 (ladite portion reposant sur les bords supérieurs du réceptacle 2 formant parties des zones de jonction situées dans la continuité du trajet de traitement 5), de rabattre le couvercle 4 sur le réceptacle 2 et de bloquer le contenant à l'état fermé, d'enclencher le fonctionnement des moyens actifs 7, 7' ; 8, 8' et d'entraîner progressivement les fibres ou filaments 6 à travers ledit appareil 1 sur toute la longueur à nettoyer, le nettoyage se terminant au niveau des extrémités libres desdit(e)s fibres ou filaments 6.

En vue d'éviter une mauvaise introduction des fibres ou filaments 6 dans l'appareil 1 et un éventuel enchevêtrement de ces demier(e)s lorsque plusieurs faisceaux sont traités simultanément, ledit appareil 1 peut comporter, d'une part, au niveau de l'entrée du trajet de traitement 5, au moins un peigne 9 ou guide séparateur analogue et, d'autre part, au niveau de la sortie du trajet de traitement 5, au moins une paire 14, 14' de rouleaux en contact mutuel et entraînés en rotation, pour l'extraction, l'essorage et/ou le séchage des fibres ou filaments 6 traité(e)s.

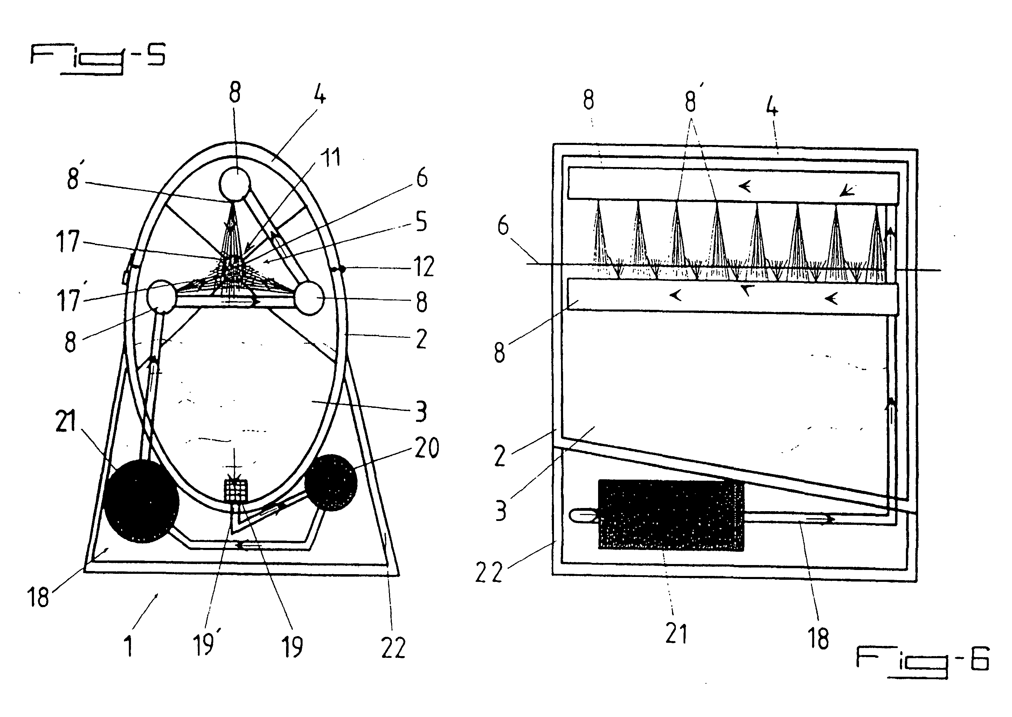

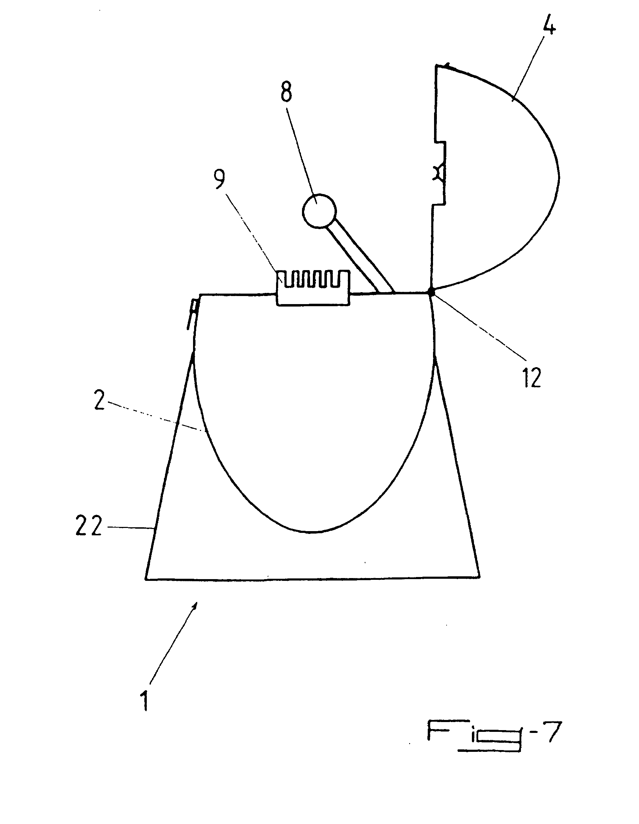

En outre, pour uniformiser et automatiser le nettoyage et fournir immédiatement après traitement des fibres ou filaments 6 propres et secs, ledit appareil 1 peut également comporter, au niveau de la sortie du trajet de traitement 5, au moins une paire 14, 14' de rouleaux en contact mutuel et entraînés en rotation, pour l'extraction, l'essorage et/ou le séchage des fibres ou filaments 6 traité(e)s (figure 4).

Conformément à un premier mode de réalisation de l'invention, représenté aux figures 1 à 4 des dessins annexés, les moyens actifs se présentent sous la forme de deux brosses circulaires rotatives 7 et 7', tournant en sens inverses, dont les poils s'interpénètrent réciproquement au niveau d'une portion du trajet de traitement 5 et s'y déplacent contrairement à la direction de défilement des filaments ou fibres 6 à nettoyer.

En variante, les moyens actifs 7 et 7' peuvent également consister en au moins une paire de rouleaux rotatifs en contact mutuel, constitués ou recouverts d'un matériau mou, mouillable et à action abrasive douce, tel que de la mousse, de l'éponge ou analogue, et tournant de manière à générer des forces de frottement, au niveau des fibres ou filaments 6 passant entre eux, opposés à la direction de déplacement de ces dernier(e)s.

Comme le montrent les figures 1, 3 et 4 des dessins annexés, l'un(e) 7 des brosses circulaires ou rouleaux est monté(e) dans le couvercle 4 et l'autre 7' dans le réceptacle 2, en étant partiellement immergé(e) dans le liquide de nettoyage 3, des moyens mécaniques d'entraînement en rotation simultané des deux brosses circulaires 7 et 7' ou rouleaux, à actionnement manuel ou motorisé, étant montés sur l'extérieur du contenant et formant une chaîne cinématique 15 fonctionnelle lorsque le couvercle 4 et le réceptacle 2 sont assemblés pour constituer le contenant fermé.

Cette chaîne cinématique 15 pourra être formé par exemple d'un arrangement de roues et de pignons dentés engrenant les uns avec les autres, de poulies et de courroies de transmission ou encore d'un arrangement mixte de moyens de différentes natures.

Conformément à une caractéristique de l'invention représentée plus particulièrement sur la figure 2 des dessins annexés, les moyens de guidage comprenent, à chaque extrémité du trajet de traitement 5, dans le contenant, une paire d'ailes 10 et 10' en regard et mutuellement inclinées l'une vers l'autre de manière à constituer un passage 16 en forme de fente disposé en regard des zones de jonction couvercle 4 réceptacle 2 situées dans la continuité du trajet de traitement 5 et s'étendant parallèlement à ces zones de jonction, lesdits passages 16 présentant une largeur décroissante en direction de l'intérieur du contenant.

Ainsi, les paires d'ailes 10, 10' constituent également des moyens de limitation des projections de liquide de nettoyage vers les zones de jonction couvercle 4 / réceptacle 2 ; et évitent l'enroulement ou l'enchevêtrement des fibres ou des filaments 6 au niveau des moyens actifs rotatifs 7, 7'.

Selon un mode de réalisation de l'invention, et comme le montrent les figures 5 à 7 des dessins annexés, les moyens actifs se présentent sous la forme d'au moins deux rampes de projection 8 s'étendant parallèlement au trajet de traitement 5, sur au moins une portion de la longueur de ce dernier, et dont les jets, issus d'alignements d'orifices ou de buses d'éjection 8', sont dirigés vers ledit trajet de traitement 5.

Préférentiellement, ledit appareil de nettoyage 1 comporte trois rampes de projection 8 réparties sensiblement uniformément autour du trajet de traitement 5 et dont les jets sont alternés le long dudit trajet 5 et convergent vers ce dernier.

Une telle réalisation des moyens actifs 8. 8' permet d'éviter tout contact mécanique avec les fibres ou filaments 6 à nettoyer et peut ainsi être utilisée même pour des produits très fragiles et/ou cassants, tout en produisant un effet à la fois nettoyant et démêlant.

Afin de garantir un guidage optimal des fibres ou filaments 6 dans la zone d'action nettoyante maximale, le trajet de traitement 5 est délimité matériellement, au moins pour sa portion soumis aux jets des rampes de projection 8, par un conduit ou tube de guidage 17, 17' perforé, grillagé, treillissé ou analogue, composé, le cas échéant, par deux parties allongées complémentaires, dont l'une 17 est solidaire du couvercle 4 et l'autre 17' du réceptacle 2 et qui forment par assemblage et coopération ledit conduit ou tube lors de la fermeture du contenant 2, 4.

Il convient de noter que ces moyens actifs 8, 8' présentent une grande souplesse de réglage de la force de nettoyage par simple ajustement de la pression d'éjection ou de la forme de jets et/ou occlusion plus ou moins importante du conduit ou tube de guidage, en fonction de la saleté des fibres ou filaments à nettoyer, du degré démêlage à obtenir, de leur solidité et résistance mécanique, etc...

En vue de limiter des quantités de liquide de nettoyage 3 nécessaires, mesure appréciable lors d'intervention sur chantiers, l'appareil de nettoyage 1 peut comporter un circuit de recirculation 18 du liquide de nettoyage et d'alimentation des rampes de projection 8 comprenant notamment, outre des conduits de liaison, une crépine 19 couvrant une ouverture d'aspiration 19' située au point le plus bas du réceptacle 2 à fond incliné, un filtre 20 pour les impuretés de faible taille et une pompe de circulation 21 entraînée par un moteur 15' (alimenté par piles, batterie ou prise sur véhicule), ledit circuit 18 et le contenant 2 et 4 étant montés dans un châssis support 22 formant embase (voir figure 5).

Conformément à une caractéristique supplémentaire de l'invention, le couvercle 4 est muni d'au moins une poignée de préhension 23 pour le déplacement dudit appareil de nettoyage 1 lors de son transport et/ou lors de sa mise en oeuvre, le couvercle 4 et le réceptacle 2 étant réalisés préférentiellement en un matériau transparent ou au moins translucide.

Dans les deux modes de réalisation décrits ci-dessus, l'appareil de nettoyage 1 pourra comporter une sécurité de fonctionnement, n'autorisant la marche dudit appareil qu'en cas de rabattement complet du couvercle 4 sur le réceptacle 2, ou le cas échéant verrouillage dudit rabattement.

Lorsque l'appareil de nettoyage 1 est muni d'une poignée de préhension 23 cette dernière pourra être pourvue d'un organe de commande, tel qu'un interrupteur ou analogue.

## Revendications

1. Appareil pour le nettoyage de fibres ou de filaments, notamment de fibres optiques en faisceau(x) après leur détubage, essentiellement composé, d'une part, d'un contenant comprenant une partie inférieure (2) formant réceptacle étanche pour un liquide de nettoyage (3) et une partie supérieure (4) formant couvercle, ledit contenant étant traversé progressivement, suivant un trajet de traitement (5) prédéfini, par les filaments ou fibres (6) à nettoyer, sur toute leur longueur et, d'autre part, par des moyens actifs (7, 7' ; 8, 8') de mise en contact positif du liquide de nettoyage (3) avec lesdit(e)s filaments ou fibres (6) pour générer une action nettoyante et, enfin, par des moyens de guidage (9 ; 10, 10' ; 11) de ces dernier(e)s à travers ledit appareil de nettoyage (1), **caractérisé en ce que** lesdits moyens de guidage (9 ; 10, 10' ; 11) comprennent au moins un peigne (9) ou un guide séparateur analogue au niveau de l'entrée du trajet de traitement (5) et **en ce que** la partie supérieure (4) est munie d'au moins une poignée de préhension (23) pour le déplacement dudit appareil de nettoyage (1) lors de son transport et/ou de sa mise en oeuvre, ledit appareil étant ainsi adapté pour une utilisation sur chantier.

2. Appareil selon la revendication 1, **caractérisé en ce que** le couvercle (4) est articulé par une liaison à charnière (12) sur le réceptacle (2), avec un axe de pivotement sensiblement parallèle au trajet de traitement (5), le couvercle (4) et/ou le réceptacle (2) comprenant des moyens d'étanchéisation (13) coopérant lors de la fermeture du contenant pour constituer un volume clos étanche, tout en autorisant un passage aisé des filaments ou fibres (6) à nettoyer au niveau des zones de jonction couvercle (4) / réceptacle (2) situées dans la continuité du trajet de traitement (5).

3. Appareil selon l'une quelconque des revendications 1 et 2, **caractérisé en ce qu'**il comporte, au niveau de la sortie du trajet de traitement (5), au moins une paire (14, 14') de rouleaux en contact mutuel et entraînés en rotation, pour l'extraction, l'essorage et/ou le séchage des fibres ou filaments (6) traité(e)s.

4. Appareil selon l'une quelconque des revendications 1 à 3, **caractérisé en ce que** les moyens actifs se présentent sous la forme de deux brosses circulaires rotatives (7 et 7'), tournant en sens inverses, dont les poils s'interpénètrent réciproquement au niveau d'une portion du trajet de traitement (5) et s'y déplacent contrairement à la direction de défilement des filaments ou fibres (6) à nettoyer.

5. Appareil selon l'une quelconque des revendications 1 à 3, **caractérisé en ce que** les moyens actifs (7, 7') consistent en au moins une paire de rouleaux rotatifs en contact mutuel, constitués ou recouverts d'un matériau mou, mouillable et à action abrasive douce, telle que de la mousse, de l'éponge ou analogue, et tournant de manière à générer des forces de frottement, au niveau des fibres ou filaments (6) passant entre eux, opposées à la direction de déplacement de ces demier(e)s.

6. Appareil selon l'une quelconque des revendications 4 et 5, **caractérisé en ce que** l'un(e) (7) des brosses circulaires ou rouleaux est monté(e) dans le couvercle (4) et l'autre (7') dans le réceptacle (2), en étant partiellement immergé(e) dans le liquide de nettoyage (3), des moyens mécaniques d'entraînement en rotation simultané des deux brosses circulaires (7 et 7') ou rouleaux, à actionnement manuel ou motorisé, étant montés sur l'extérieur du contenant et formant une chaîne cinématique (15) fonctionnelle lorsque le couvercle (4) et le réceptacle (2) sont assemblés pour constituer le contenant fermé.

7. Appareil selon l'une quelconque des revendications 4 à 6, **caractérisé en ce que** les moyens de guidage comprenent, à chaque extrémité du trajet de traitement (5), dans le contenant, une paire d'ailes (10 et 10') en regard et mutuellement inclinées l'une vers l'autre de manière à constituer un passage (16) en forme de fente disposé en regard des zones de jonction couvercle (4) réceptacle (2) situées dans la continuité du trajet de traitement (5) et s'étendant parallèlement à ces zones de jonction, lesdits passages (16) présentant une largeur décroissante en direction de l'intérieur du contenant.

8. Appareil selon l'une quelconque de revendications 1 à 3, **caractérisé en ce que** les moyens actifs se présentent sous la forme d'au moins deux rampes de projection (8) s'étendant parallèlement au trajet de traitement (5), sur au moins une portion de la longueur de ce dernier, et dont les jets, issus d'alignements d'orifices ou de buses d'éjection (8'), sont dirigés vers ledit trajet de traitement (5).

9. Appareil selon la revendication 8, **caractérisé en ce qu'**il comporte trois rampes de projection (8) réparties sensiblement uniformément autour du trajet de traitement (5) et dont les jets sont alternés le long dudit trajet (5) et convergent vers ce dernier.

10. Appareil selon l'une quelconque des revendications 8 et 9, **caractérisé en ce que** le trajet de traitement (5) est délimité matériellement, au moins pour sa portion soumis aux jets des rampes de projection (8), par un conduit ou tube de guidage (17, 17') perforé, grillagé, treillissé ou analogue, composé, le cas échéant, par deux parties allongées complémentaires, dont l'une (17) est solidaire du couvercle (4) et l'autre (17') du réceptacle (2) et qui forment par assemblage et coopération ledit conduit ou tube lors de la fermeture du contenant.

11. Appareil selon l'une quelconque des revendications 8 à 10, **caractérisé en ce qu'**il comporte un circuit de recirculation (18) du liquide de nettoyage et d'alimentation des rampes de projection (8) comprenant notamment, outre des conduits de liaison, une crépine (19) couvrant une ouverture d'aspiration (19') située au point le plus bas du réceptacle (2) à fond incliné, un filtre (20) pour les impuretés de faible taille et une pompe de circulation (21) entraînée par un moteur, ledit circuit (18) et le contenant (2 et 4) étant montés dans un châssis support (22) formant embase.

12. Appareil selon l'une quelconque des revendications 1 à 11, **caractérisé en ce que** le couvercle (4) et le réceptacle (2) sont réalisés en un matériau transparent ou au moins translucide.

## Patentansprüche

1. Vorrichtung zum Reinigen von Fasern oder Fäden, insbesondere von optischen Fasern in Bündel(n) nach ihrer Formung, im Wesentlichen gebildet einerseits aus einem Behälter umfassend einen unteren Teil (2), der eine dichte Aufnahme für eine Reinigungsflüssigkeit (3) bildet, und einen oberen Teil (4), der eine Abdeckung bildet, wobei dieser Behälter gemäß einem definierten Behandlungsweg (5) fortschreitend von den zu reinigenden Fäden oder Fasern (6) über ihre gesamte Länge durchquert wird, und andererseits aus Funktionsmitteln (7, 7'; 8, 8') zum positiven in Kontakt bringen der Reinigungsflüssigkeit (3) mit den Fäden oder Fasern (6), um eine Reinigungswirkung zu erzeugen, und schließlich aus Führungsmitteln (9; 10, 10'; 11) für diese durch die Reinigungsvorrichtung (1), **dadurch gekennzeichnet, dass** die Führungsmittel (9; 10, 10'; 11) mindestens einen Kamm (9) oder eine analoge Trennungsführung auf Höhe des Eintritts des Behandlungsweges (5) umfassen und dadurch, dass der obere Teil (4) mit mindestens einem Handgriff (23) zum Versetzen der Reinigungsvorrichtung (1) bei ihrem Transport und/oder ihrem Einsatz ausgerüstet ist, wobei die Vorrichtung auf diese Weise für eine Verwendung vor Ort geeignet ist.

2. Vorrichtung nach Anspruch 1, **dadurch gekennzeichnet, dass** die Abdeckung (4) durch eine Scharnierverbindung (12) gelenkig an der Aufnahme (2) angebracht ist, mit einer Schwenkachse im Wesentlichen parallel zum Behandlungsweg (5), wobei die Abdeckung (4) und/oder die Aufnahme (2) Abdichtmittel (13) umfassen, die beim Schließen des Behälters kooperieren, um ein dichtes geschlossenes Volumen auszubilden, wobei ein leichter Durchtritt der zu reinigenden Fäden oder Fasern (6) auf Höhe der Verbindungszonen Abdeckung (4)/Aufnahme (2) möglich ist, die in der Fortsetzung des Behandlungsweges (5) liegen.

3. Vorrichtung nach einem der Ansprüche 1 oder 2, **dadurch gekennzeichnet, dass** sie auf Höhe des Austritts des Behandlungsweges (5) mindestens ein Paar (14, 14') Walzen umfasst, die miteinander in Kontakt und in Rotation angetrieben sind, um die behandelten Fasern oder Fäden (6) herauszuziehen, auszuwringen und/oder zu trocknen.

4. Vorrichtung nach einem der Ansprüche 1 bis 3, **dadurch gekennzeichnet, dass** die Funktionsmittel in Form von zwei kreisförmigen rotierenden Bürsten (7 und 7') vorhanden sind, die sich in gegenläufiger Richtung drehen, deren Borsten sich auf Höhe eines Teils des Behandlungsweges (5) gegenseitig durchdringen, und sich entgegen der Abzugsrichtung der zu reinigenden Fäden oder Fasern (6) verschieben.

5. Vorrichtung nach einem der Ansprüche 1 bis 3, **dadurch gekennzeichnet, dass** die Funktionsmittel (7 und 7') aus mindestens einem Paar drehbarer Walzen in Kontakt miteinander gebildet sind, die aus einem weichen, benetzbaren und leicht abrasiv wirkenden Material gebildet oder damit überzogen sind, wie Schaumstoff, Schwamm oder Analoges, und die sich derart drehen, dass auf Höhe der Fasern oder Fäden (6), die zwischen ihnen hindurchlaufen, Reibungskräfte erzeugt werden, die ihrer Verschiebungsrichtung entgegengesetzt sind.

6. Vorrichtung nach einem der Ansprüche 4 oder 5, **dadurch gekennzeichnet, dass** eine (7) der kreisförmigen Bürsten oder Walzen in der Abdeckung (4) angebracht ist und die andere (7') in der Aufnahme (2), wobei sie teilweise in die Reinigungsflüssigkeit (3) eingetaucht sind, wobei mechanische Mittel zum simultanen Rotationsantrieb der beiden kreisförmigen Bürsten (7 und 7') oder Walzen zur Betätigung von Hand oder durch Motor auf der Außenseite des Behälters angebracht sind und eine funktionelle kinematische Kette (15) bilden, wenn die Abdeckung (4) und die Aufnahme (2) zusammengesetzt sind, um den geschlossenen Behälter auszubilden.

7. Vorrichtung nach einem der Ansprüche 4 bis 6, **dadurch gekennzeichnet, dass** die Führungsmittel an jedem Ende des Behandlungsweges (5) im Behälter ein Paar Flügel (10 und 10') umfassen, die sich gegenüberstehen und zueinander geneigt sind, so dass sie einen Durchtritt (16) in Form eines Spalts bilden, der gegenüber den Verbindungszonen Abdeckung (4)/Aufnahme (2) angeordnet ist, die in der Verlängerung des Behandlungsweges (5) gelegen sind, und sich parallel zu den Verbindungszonen erstrecken, wobei die Durchtritte (16) eine in Richtung des Behälterinneren abnehmende Breite aufweisen.

8. Vorrichtung nach einem der Ansprüche 1 bis 3, **dadurch gekennzeichnet, dass** die Funktionsmittel in Form von mindestens zwei Spritzleisten (8) vorliegen, die sich parallel zum Behandlungsweg (5), über mindestens einen Teil dessen Länge erstrecken, und deren Strahlen, aus Anordnungen von Spritzöffnungen oder ―düsen (8') ausgegeben, zum Behandlungsweg (5) gerichtet sind.

9. Vorrichtung nach Anspruch 8, **dadurch gekennzeichnet, dass** sie drei Spritzleisten (8) umfasst, die im Wesentlichen gleichmäßig über den Behandlungsweg (5) verteilt sind und deren Strahlen entlang des Weges (5) aufeinanderfolgen und zu diesem konvergent sind.

10. Vorrichtung nach einem der Ansprüche 8 und 9, **dadurch gekennzeichnet, dass** der Behandlungsweg (5), mindestens für seinen Teil, der den Strahlen der Spritzleisten (8) ausgesetzt ist, durch einen perforierten, gitterförmigen, netzförmigen oder analogen Führungskanal oder ein Führungsrohr (17, 17') materiell begrenzt ist, der gegebenenfalls aus zwei komplementären länglichen Teilen zusammengesetzt ist, deren eines (17) mit der Abdeckung (4) verbunden ist und das andere (17') mit der Aufnahme (2), und die bei Verschließen des Behälters durch Zusammenbau und Kooperation den Kanal oder das Rohr bilden.

11. Vorrichtung nach einem der Ansprüche 8 bis 10, **dadurch gekennzeichnet, dass** sie einen Umwälzkreislauf (18) für die Flüssigkeit zur Reinigung und Versorgung der Spritzleisten (8) aufweist, die außer den Verbindungsleitungen insbesondere ein Sieb (19) umfassen, das eine Ansaugöffnung (19') bedeckt, die am untersten Punkt der Aufnahme (2) mit geneigtem Boden gelegen ist, einen Filter (20) für kleine Verunreinigungen und eine Umwälzpumpe (21), die von einem Motor angetrieben ist, wobei der Kreislauf (18) und der Behälter (2 und 4) in einem Trägerrahmen (22) montiert sind, der einen Sockel bildet.

12. Vorrichtung nach einem der Ansprüche 1 bis 11, **dadurch gekennzeichnet, dass** die Abdeckung (4) und die Aufnahme (2) aus einem transparenten oder mindestens durchscheinenden Material ausgeführt sind.

## Claims

1. Apparatus for cleaning fibres or filaments, in particular optical fibres in a bundle or bundles after their unsheathing, essentially consisting on the one hand of a container comprising a lower portion (2) that forms a leakproof receptacle for a cleaning liquid (3) and an upper portion (4) forming a lid, the said container being traversed progressively, along a predefined treatment path (5), by the filaments or fibres (6) to be cleaned along their entire length, and on the other hand, active means (7, 7'; 8, 8') for bringing the cleaning liquid (3) into positive contact with the said filaments or fibres (6) in order to generate a cleaning action, and finally, means (9; 10, 10'; 11) for guiding the fibres or filaments through the said cleaning apparatus (1), **characterised in that** the said guiding means (9; 10, 10'; 11) comprise at least one comb (9) or analogous separating guide at the level of the inlet to the treatment path (5), and the upper portion (4) is fitted with at least one carrying handle (23) for the movement of the said cleaning apparatus (1) during its transport and/or operation, the said apparatus thus being adapted for on-site use.

2. Apparatus according to Claim 1, **characterised in that** the lid (4) is articulated by a hinge joint (12) to the receptacle (2), with a pivoting axis substantially parallel to the treatment path (5), and the lid (4) and/or receptacle (2) comprise sealing means (13) which cooperate when the container is closed, to form a leakproof closed volume while allowing easy passage of the filaments or fibres (6) to be cleaned at the level of the junction zones between the lid (4) and the receptacle (2), the said zones being located in line with the treatment path (5).

3. Apparatus according to either of Claims 1 and 2, **characterised in that** at the level of the outlet of the treatment path (5) it comprises at least one pair of rolls (14, 14') in mutual contact and driven in rotation, for the extraction, draining and/or drying of the treated fibre(s) or filament(s) (6).

4. Apparatus according to any of Claims 1 to 3, **characterised in that** the active means are in the form of two rotary circular brushes (7 and 7') rotating in opposite directions, whose bristles reciprocally interpenetrate at the level of part of the treatment path (5) and move in the direction opposite to the travel direction of the filaments or fibres (6) to be cleaned.

5. Apparatus according to any of Claims 1 to 3, **characterised in that** the active means (7, 7') consist of at least one pair of rotating rolls in mutual contact, consisting of or covered with a soft, yielding material with a mildly abrasive action, such as foam, sponge or suchlike, which rotate so as to generate friction forces at the level of the fibres or filaments (6) passing between them, said forces being in the direction opposite to the travel direction of the latter.

6. Apparatus according to any of Claims 4 or 5, **characterised in that** one (7) of the circular brushes or rolls is mounted in the lid (4) and the other (7') in the receptacle (2), being partially immersed in the cleaning liquid (3), mechanical means for driving the two circular brushes (7 and 7') or rolls in simultaneous rotation, actuated manually or by motorisation, being mounted on the outside of the container and forming a functional kinematic chain (15) when the lid (4) and the receptacle (2) are fitted together to form the closed container.

7. Apparatus according to any of Claims 4 to 6, **characterised in that** the guiding means comprise, at each end of the treatment path (15) within the container, a pair of flaps (10 and 10') opposite and inclined towards one another so as to create a slot-shaped passage (16) arranged opposite the junction zones between the lid (4) and the receptacle (2) in line with the treatment path (5) and extending parallel to the said junction zones, the said passages (16) having a width that decreases towards the inside of the container.

8. Apparatus according to any of Claims 1 to 3, **characterised in that** the active means are in the form of at least two rows of projection outlets (8) that extend parallel to the treatment path (5) along at least part of the latter's length, and whose jets, emerging from aligned orifices or ejection nozzles (8'), are directed towards the said treatment path (5).

9. Apparatus according to Claim 8, **characterised in that** it comprises three rows of projection outlets (8) distributed essentially uniformly around the treatment path (5), whose jets alternate along the said path (5) and converge towards the latter.

10. Apparatus according to either of Claims 8 and 9, **characterised in that** the treatment path (5) is delimited materially, at least along its portion subjected to the action of the jets of the rows of projection outlets (8), by a guiding duct or tube (17, 17') which is perforated, grated, latticed or suchlike, consisting if necessary of two complementary elongated portions, one (17) of which is attached to the lid (4) and the other (17') of which is attached to the receptacle (2), which come together to form the said duct or tube by cooperation when the container is closed.

11. Apparatus according to any of Claims 8 to 10, **characterised in that** it comprises a circuit (18) for recirculating the cleaning liquid and feeding it to the rows of projection outlets (8), this circuit comprising in particular, besides the connection pipes, a strainer (19) covering an inlet aperture (19') located at the lowest point of the receptacle (2) with an inclined bottom, a filter (20) for fine impurities, and a circulation pump (21) driven by a motor, the said circuit (18) and the container (2 and 4) being mounted in a support frame (22) that forms its base.

12. Apparatus according to any of Claims 1 to 11, **characterised in that** the lid (4) and the receptacle (2) are made of a transparent or at least a translucid material.
